# EUROPEAN PATENT APPLICATION

(11) **EP 2 638 828 A1**
(43) Date of publication of application: **18.09.2013**
(21) Application number: 13158117.5
(22) Date of filing: 07.03.2013
(51) Int. Cl.: A47C 11/00, F16B 15/00

(54) **Sauna-bench unit, transverse support for a sauna-bench unit, method for assembling a sauna-bench unit, sauna-bench system, and a packaged sauna-bench unit**

(30) Priority: 13.03.2012 FI 20125271
(71) Applicant: Harvia OY, 40950 Muurame (FI)
(72) Inventor: Ahonen, Eerikki, 40800 VAAJAKOSKI (FI)
(74) Representative: Helke, Kimmo Kalervo

(57) **Abstract**

The invention relates to a sauna-bench unit, which includes elongated pieces (11.1 - 11.6) arranged to form a functional surface (12) for the sauna-bench unit, transverse supports (13), to which at least some of the pieces are attached, longitudinal supports (14) fitted to the outermost pieces (11.1, 11.6), which are arranged on the opposite side of the pieces relative to the surface and between which the said transverse supports are fitted. The transverse supports are metal profile pieces (15), at the ends (18) of which are grips (16) for attachment to the longitudinal supports. Between the transverse supports and the pieces attached to them and arranged to form the surface is a joint created by means of nail-plate grip formations (17). In addition, the invention also relates to a transverse support for a sauna-bench unit, a method in assembling a sauna-bench unit, a sauna-bench system, and a packaged sauna-bench unit.

## Description

The present invention relates to a sauna-bench unit, which includes
- elongated pieces arranged to form a functional surface for the sauna-bench unit,
- transverse supports, to which at least some of the pieces are attached,
- longitudinal supports fitted to the outermost pieces of the surface, which are arranged on the opposite side of the pieces relative to the surface and between which the said transverse supports are fitted.

In addition, the invention also relates to a transverse support for a sauna-bench unit, a method in assembling a sauna-bench unit, and a packaged sauna-bench unit.

Various types of sauna-bench unit, which form, for example, the bench surface of sauna benches, are known from the prior art. One first example is transversely planked sauna benches, in which the pieces forming the bench surface are attached to each other by means of supports fitted to the unit's end edges and underneath it.

Sauna benches formed of elongated planks are also known. In these, there are transverse supports, to which the pieces are attached, on the opposite side of the pieces relative to the bench surface. The supports are at a distance from each other in the longitudinal direction of the sauna-bench unit. In addition, in the longitudinal direction of the unit, longitudinal supports, to which the transverse supports can also be attached, are fitted to the outermost pieces forming the bench surface.

In known sauna-bench-unit solutions, the unit is assembled with screwed or nailed joints. Industrial-scale production consumes a large number of screws and nails, adding to both the material and labour costs of the unit, for example when assembling sauna-bench units.

A second drawback of the prior art relates to the limited load-bearing capacity of the sauna-bench units. Attempts have been made to increase load-bearing capacity by means of sauna-bench-frame solutions, in which the load-bearing capacity has been increased by shortening the span required to carry the unit. This, however, complicates the construction of the sauna-bench frames, leading in turn to material and labour costs, for example in the assembly of the sauna-bench frame.

The present invention is intended to create a sauna-bench unit with a simple assembly. In addition, the invention is also intended to create a transverse support for a sauna-bench unit, a method in assembling a sauna-bench unit, a sauna-bench system, and a packaged sauna-bench unit. The characteristic features of the sauna-bench unit according to the invention are stated in Claim 1, and those of the transverse support, the method, the sauna-bench system, and the packaged sauna-bench unit are stated in Claims 10, 11, 13, and 15.

In the invention, the transverse supports of the pieces forming a functional surface for the sauna-bench unit are metal-profile pieces, at the ends of which are grips for attachment to the longitudinal supports. In addition, there is a joint created by nail-plate grip formations between the transverse supports and the pieces attached to them and arranged to form the functional surface. The joint constructions substantially simplify and accelerate the assembly of the sauna-bench unit and also reduce material costs.

According to one embodiment, the longitudinal supports of the sauna-bench unit can fitted rigidly to the outermost pieces of the functional surface. This will further improve the stiffness of the sauna-bench unit and also facilitate its assembly.

According to one embodiment, the longitudinal supports can include a recess for the grips of the transverse support. The grip can be formed by at least one protrusion fitted to both ends of the transverse support, which can be fitted into the recess arranged in the longitudinal support. This makes it extremely simple to attach the transverse support to the longitudinal support.

The method according to the invention permits a sauna-bench unit to be assembled simply and rapidly, in which the transverse supports are attached surprisingly mainly simultaneously to the pieces forming the functional surface and to the longitudinal supports, by means of a compression method. According to one embodiment, compression can be applied in only one direction, making it extremely simple to implement.

In terms of its structure, manufacture, and assembly, the sauna-bench system according to the invention is extremely simple. Because the sauna-bench units are self-supporting, in principle they require no supporting sauna-bench frame in the longitudinal direction of the actual bench planks, instead the transverse supports attached to the structures, on top of which the sauna-bench elements are set, will be sufficient by themselves. In this way, the frameless space under the sauna benches will also be easy to clean, for example. Other additional advantages gained with the invention appear in the description portion and the characteristic features in the accompanying Claims.

The invention, which is not restricted to the embodiment disclosed in the following, is described in detail with reference to the accompanying figures, in which
- Figure 1: shows an axonometric view of an example of the sauna-bench unit,
- Figures 2a - 2c: show the sauna-bench unit shown in Figure 1, seen from different directions,
- Figure 3: shows an axonometric view of the transverse support, and
- Figures 4a - 4c: show the transverse support shown in Figure 3, seen from different directions.

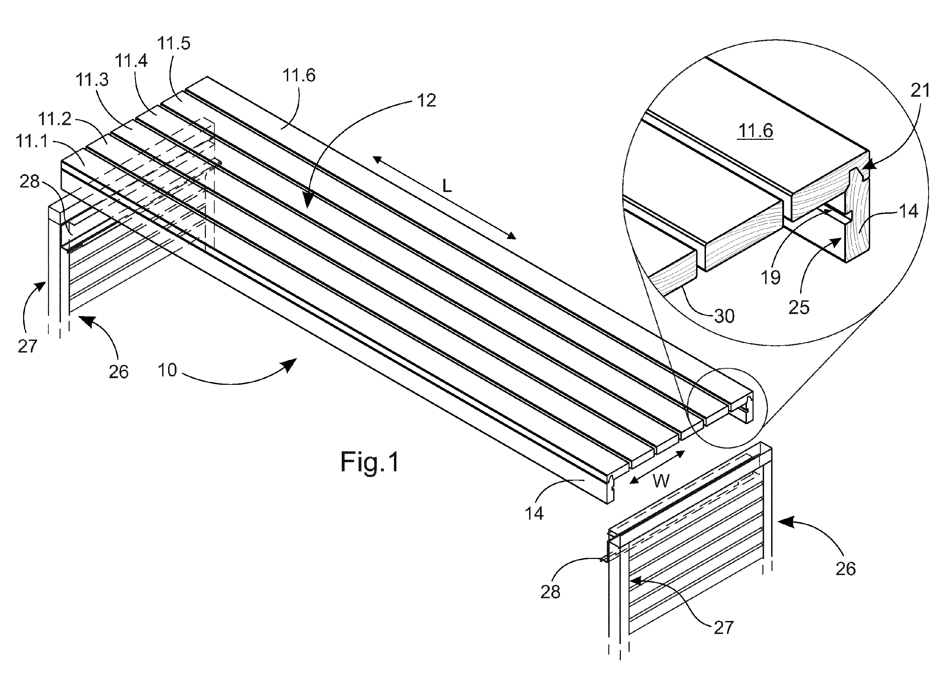

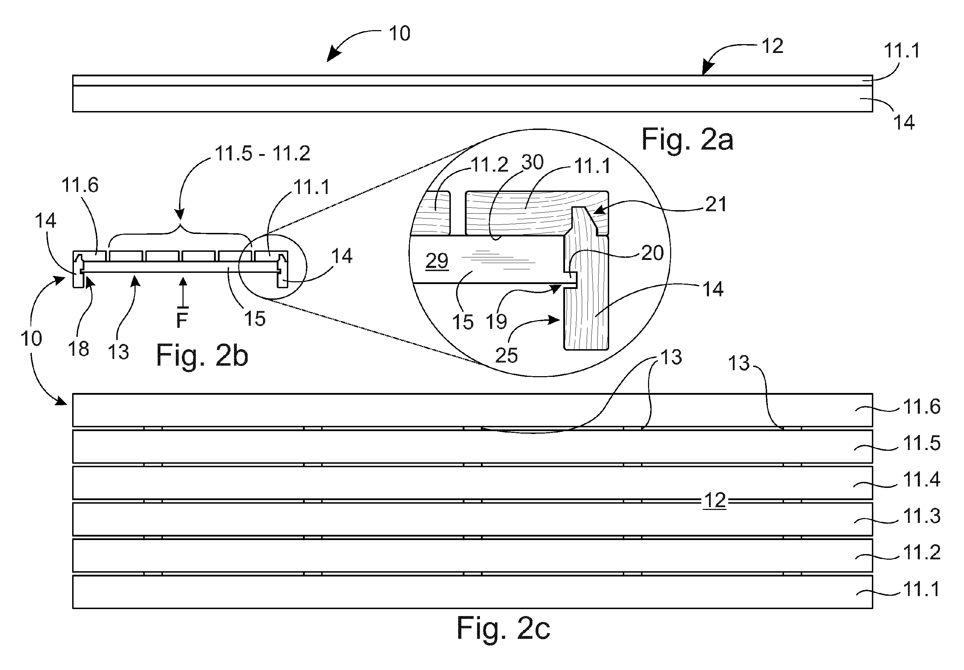

Figure 1 shows an axonometric view of one example of the sauna-bench unit 10 while Figures 2a - 2c show the unit seen from different directions. The sauna-bench unit 10 is primarily intended for a sauna-bench structure or similar furnishing totality for saunas or bathrooms in general, of which some, non-restricting, examples of its functions are seats, footrests or step-rests, intermediate partitions, and backrests. In general, it can be said that the sauna-bench unit 10 possesses a functional surface 12, the purpose of which depends on location of the sauna-bench unit 10 in the overall structural system.

The sauna-bench unit 10 includes, as its basic component, a functional surface 12, transverse supports 13, and longitudinal supports 14. In the case according to the embodiment, the functional surface of the sauna-bench unit 10 is a sauna-bench surface 12. In this case, the sauna-bench surface 12 is formed of elongated pieces 11.1 - 11.6, which are now, for example, planks of wood. In the case according to the embodiment, the pieces 11.1 - 11.6 forming the sauna-bench surface 12 are parallel to the longitudinal direction L of the sauna-bench unit 10. On the other hand, they could equally well be, for example, transverse to the longitudinal direction L of the sauna-bench unit 10, i.e. for example, parallel to the lateral direction W of the unit 10. The directions L and W are shown in Figure 1.

The pieces 11.1 - 11.6 forming the sauna-bench surface 12 are attached to transverse supports 13 (Figure 2c). Each piece 11.1 - 11.6 need not necessarily be attached to each transverse support 13. The transverse supports 13 are parallel to each other at a distance to each other, for example at equal intervals, on the opposite side of the pieces 11.1 - 11.6 relative to the sauna-bench surface 12. Thus, the transverse supports 13 are under the pieces 11.1 - 11.6, when the sauna-bench unit 10 is in the position in which it will be used. In addition, the face surface 24 of the transverse unit 13 is parallel to the surface 12 formed by the pieces 11.1 - 11.6. Though the longitudinal direction of the transverse supports 13 is now shown as being transverse relative to the pieces 11.1 - 11.6, they can also be at least to some extent in an angled arrangement to the pieces 11.1 - 11.6 and also to each other.

The longitudinal supports 14 are fitted to the outermost pieces 11.1, 11.6 of the sauna-bench surface 12 (Figure 1 and Figure 2b). Here, the term longitudinal supports 14 refers to elongated supports that are principally parallel to the elongated pieces 11.1 - 11.6 forming the sauna-bench surface 12. The material of the longitudinal supports too can be wood. The longitudinal supports 14 are also on the opposite side of the pieces 11.1 - 11.6 relative to the sauna-bench surface 12. The transverse supports 13 are fitted between the longitudinal supports 14, as can be seen clearly in Figure 2b.

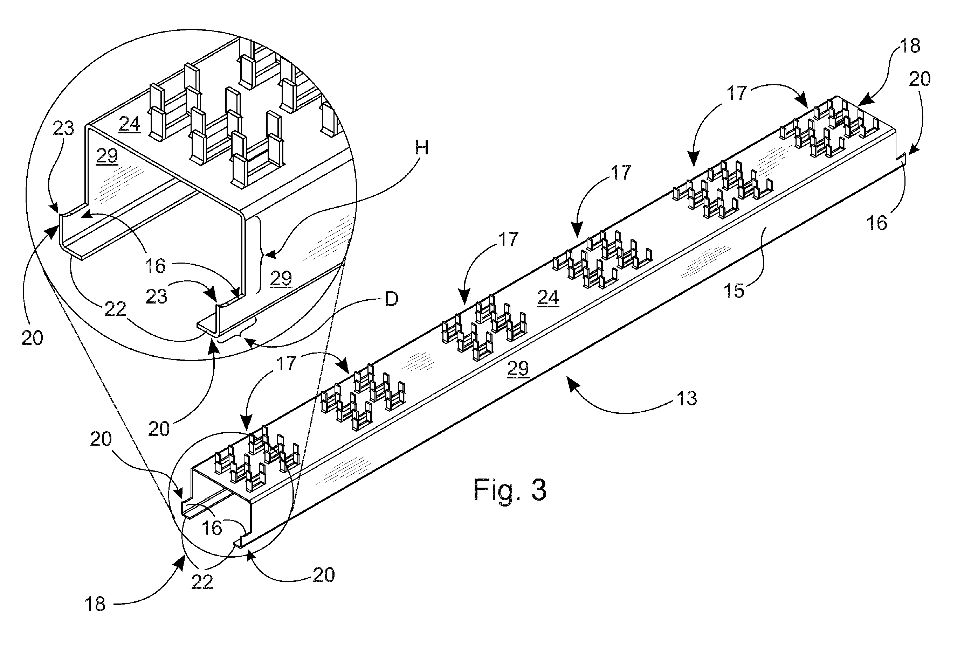

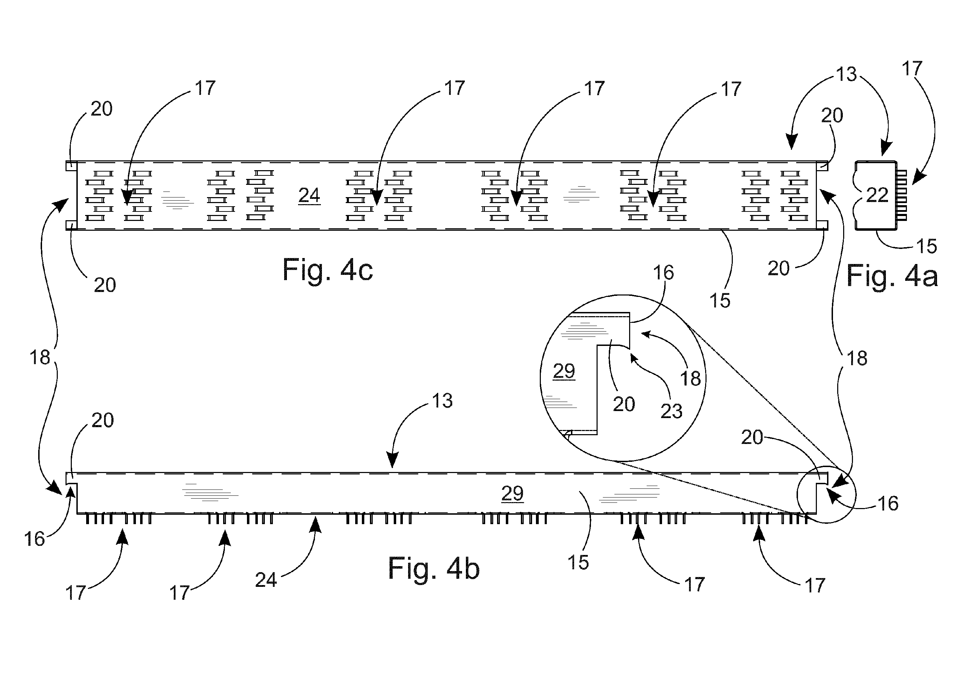

Figures 3 and 4a - 4c show one example of a transverse support 13. The transverse supports 13 are now elongated metal profile pieces 15. In the case according to the embodiment, the transverse support 13 is a C-shape profile rail 15, which has a face 24 and flanges 29 starting from its opposite longitudinal edges at right angles to the face 24. In addition, in order to stiffen the C profile 15, beadings 22 are arranged in the edges of the flanges 29 of the transverse support 13, from which the C profile 15 is open. At both ends 18 of the transverse support 13 there are grips 16 for attachment to the longitudinal supports 14.

There can be a recess 19 for the grips 16 in the longitudinal supports 14, which can be clearly seen in the insets in Figures 1 and 2b. One example of the recess is a longitudinal groove 19 in one face 25, in this case the inner face, of the longitudinal supports 14. The flanges 25 remain under the unit 10 when it is in the use position and are, in addition, opposite to each other when the supports 14 are attached to the sauna-bench unit 10. The groove 19 is easy to machine in the longitudinal support 14. In addition, it permits the transverse supports 13 to be placed freely over the entire length of the longitudinal support 14.

The insets of Figures 3 and 4b show in greater detail one example of the grip 16, fitted to the transverse support 13, for the longitudinal support 14. According to one embodiment, the grip 16 of the transverse support 13 can form at least one protrusion 20 fitted to each end 18 of the transverse support 13. In the case according to the embodiment, the grip protrusions 20 are in the ends 18 of the C-profile rail 15 on its open side, i.e. at the end points of the flanges 29. As the inset of Figure 2b shows, the sizes of the protrusion 20 and the groove 19 are arranged relative to each other in such a way that the protrusion 20 can be fitted into the groove 19 of the longitudinal support 14. The grip of the transverse support 13 to the longitudinal support 14 can be further improved, for example, by means of a sharp claw 23 arranged in the point of the grip protrusion 20.

The depth of the groove 19 of the transverse supports 14 is arranged to correspond to the length D of the grip protrusion 20 of the transverse support 13 (inset of Figure 3). Corresponding, the height H of the flange 29 of the transverse support 13 which sets against the surface of the inner face 25 of the longitudinal support 14, is arranged to correspond to the distance of the groove 19 of the longitudinal supports 14 from the undersurface 30 of the pieces 11.1, 11.6, which is the opposite side to the surface 12.

A joint is created between the transverse supports 13 and the pieces 11.1 - 11.6 attached to them and arranged to form the sauna-bench surface 12, by means of nail-plate grip formations 17. In the case according to the embodiment, the nail-plate grip formations 17 are on the outer face 24 of the C-profile rail and now also integrated in the transverse support 13. In the profile rail 15, the nail-plate grip formations 17 are parallel to the grips 16. Thus, the C profile 15 surprisingly also acts as a nailing plate. According to another embodiment, it has been possible to arrange openings in the bottom face 24 for the separate nailing plates 17. However, an integrated embodiment is more advantageous for the manufacture of the transverse support 13 and also for the assembly of the unit 10. There can be one nail-plate grip formation 17 for each piece 11.1 - 11.6.

The longitudinal supports 14 can be arranged rigidly in the outermost pieces 11.1, 11.6 of the sauna-bench surface 12. One way to achieve this is to fit the longitudinal supports 14 to the outermost pieces 11.1, 11.6 of the sauna-bench surface 12 by means of a tongue-and-groove joint 21, one example of which is shown in greater detail in the insets in Figures 1 and 2b. By means of the tongue-and-groove joint 21, the longitudinal support 14 is embedded into the outermost pieces 11.1, 11.6 of the sauna-bench surface 12 on the opposite side of the pieces 11.1, 11.6 relative to the sauna-bench surface 12 and thus their attached is made particularly rigid, when compared, for example, to a traditional butt joint of the pieces formed using screws. The attachment of the longitudinal support 14 to the pieces 11.1, 11.6 of the sauna-bench surface 12 can be ensured by an adhesive placed on the tongue 21, but a joint without adhesive is also possible. Attaching the longitudinal support 14 to the under face 30 (inset in Figure 2b) of the pieces 11.1, 11.6 creates a structure that is symmetrical from above for the sauna-bench unit 10. This permits sauna-bench units 10 to be placed next to each other to form a wider surface, without points of visual discontinuity. A spacious foot surface is one example of this.

According to one embodiment, the tongue-and-groove joint 21 can be bevelled, which will also make it self-guiding. The tongue-and-groove joint 21 will then locate the longitudinal support 14 better, in order to arrange the grip 16 of the transverse support 13 tightly in connection with the longitudinal supports 14. In addition, using a bevelled tongue-and-groove joint 21 will bring the longitudinal support 14 safely very close to the edge of the pieces 11.1, 11.6, avoiding a possible danger of them splitting.

In addition to the sauna-bench unit 10, the invention also relates to only a transverse support 13 for a sauna-bench unit 10. The transverse support 13 is arranged to be attached to at least part of longitudinal pieces 11.1 - 11.6 forming the functional surface 12 of a sauna-bench unit 10 and, in addition, to longitudinal supports 14 fitted to the outermost pieces 11.1, 11.6 of the surface 12, which are arranged on the opposite side of the pieces 11.1 - 11.6, relative to the surface 12. The transverse support 13 is a metal profile piece 15, at the ends 18 of which are grips 16 for attachment to the longitudinal supports 14. In addition, in the transverse support 13 there can also be nail-plate grip formations 17 for attaching the transverse support 13 to the pieces 11.1 - 11.6 arranged to form the surface 12. It is simple to manufacture the transverse support 13, for example, in such a way that first of all a blank for the C profile is stamped from a metal sheet, in which grip shapes 16 are formed and possible nail-plate grip formations 17 are punched out. Finally, a plate-bending press is used to shape the sheet blank into a C profile 15.

In addition to a sauna-bench unit 10 and a transverse support 13, the invention also relates to a method for assembling a sauna-bench unit 10. According to one embodiment, the wooden pieces 11.1 - 11.6 forming the functional surface 12 for the sauna-bench unit 10 can be placed in an assembly jig with the face forming the sauna-bench surface 12 set downwards. In addition, adhesive may be placed in the longitudinal tongue-groove of the piece 11.1, 11.6, which is made in the edge of the face 30, which lies underneath when the unit 10 is in the use position (inset in Figure 2b), of the outermost pieces 11.1, 11.6. The metal transverse support profiles 13 and the longitudinal supports 14 between them are correspondingly set in the top side of the jig, in such a way that the grip protrusions 20 at the ends 18 of the transverse supports 13 fit into the groove 19 in the longitudinal supports 14. The tongue of the longitudinal supports 14 is aligned with the adhesive groove of the outermost pieces 11.1, 11.6, for the creation of a tongue-and-groove joint 21.

Next, a compression method is used to secure the transverse supports 13 to the pieces 11.1 - 11.6 forming the sauna-bench surface 12 and to the longitudinal supports 14 mainly simultaneously. During compression, a compressive force F (Figure 2b) is directed to the metal transverse supports 13, which makes their end grips 16 in the grooves 19 of the longitudinal supports 14, as well as the nail-plate grip formations 17, bite into the wooden components 14, 11.1 - 11.6, locking them to each other and thus forming a rigid sauna-bench unit 10. Simultaneously, the longitudinal supports 14 become attached to the outermost pieces 11.1, 11.6 by means of a tongue-and-groove joint 21, thus also forming the joint between them during the compression and eliminating the need to attach them separately.

The precise mutual dimensioning of the C-profile rail 15 and the nail-plate grip formations 17 formed in it and the grips 16, relative to the groove 19 of the longitudinal supports 14, allows all the components to be attached to each other by means of a single pressing in one short movement. The dimensioning (H) of the end 18 of the transverse support 13 and the location of the groove 19 in the longitudinal support 14 is arranged in such a way that, when the grips 16 are in the groove 19, the points of the spikes of the nail-plate grip formations 17 correspond to the under-face 30 of the pieces 11.1 - 11.6. The edge beadings 22 of the flanges 29 of the rail 15 stiffen the rail 15, so that it retains its shape better during compression. The depth of the grip protrusions 16 in the groove 19 in the longitudinal support 14 can correspond to the height of the spikes of the nail-plate grip formations 17.

During the compression stage, the ends of the unit 10 can be cut to the correct dimension and after compression the unit 10 will be immediately ready for packing in a consumer package.

Yet another object of the invention is a sauna-bench system, a schematic example of which is shown in Figure 1. The system can include a number of sauna-bench units 10 like the individual embodiment described above and a support structure 26 fitted to them. The support structure 26 includes, for example, metal transverse supports 28 for the sauna-bench unit 10, not connected to each other, fitted to the end supports 27, which are arranged to receive the sauna-bench unit 10 and support it. In Figure 1, the sauna-bench unit 10 is shown slightly separate from the support structure 26, for greater clarity. The sauna-bench unit 10 itself can also form part of the support structure. In that case, a carrier profile 28 can be attached at the bench corner, for example, to the outer face of the longitudinal support 14, which will now be sufficiently rigid to carry a loading. The end support 27 can also be as intermediate supports. In that case, there can be transverse-support profiles 28 on either side of the vertical end support 27, for the adjacent sauna-bench elements 10.

By means of the self-supporting unit 10, the sauna-bench system becomes a frameless structure with a simple construction, so that it is also easy to dismantle and assemble. The sauna-bench unit 10 is a self-supporting beam-like structure without a separate frame. The units 10 can be separate from the supports 28, so that they can be easily lifted away, for example for cleaning, and on the other hand also easily be put back in place. The self-supporting unit 10 permits a long span for the support of the units 10, which further simplifies the support structure. At its simplest, the sauna-bench unit 10 can be supported only at its ends on the surrounding structures, walls, or, in corner-bench solutions, on an adjacent bench. The units 10 are held in place by the structure of the attachment profiles 28 and by gravity. All the units 10 can also be secured by screws, if so desired.

The sauna-bench unit 10 according to the invention also gives a significant logistical advantage. Owing to the invention, the benches, intermediate partitions, and backrests, for example, can be made into standard-length individual cardboard-packaged units for retail sales. The units 10 can be, for example, cut to the correct length only on the work site.

During the installation of the sauna benches, the bench, backrests, and intermediate partitions can all be cut to the same length. Cutting dimensions can be ready printed on the cardboard package. In a simplified form, the installation of the sauna benches can take place, for example, in such a way that the bench width is measured and the cardboard-packaged bench components are cut without removing the cardboard to the correct dimension using a handheld circular saw, utilizing the packaging's cutting dimensions. All of the components in the sauna-bench structure lying on top of each other are then sure to be cut to the same size. If the bench carriers 28 are attached to the walls and the intermediate partition carriers are in place, the bench components can then be lifted into place, starting from the intermediate partitions, and the backrest screwed to the wall without removing the protective cardboard pieces, which can act as protection on the work site. Before the sauna is used for the first time, the protective cardboard is removed and the benches possibly given a protective treatment.

During the stage of packaging the units 10, the package can be, for example, stapled or hot-glued onto the units 10, thus avoiding movement of the units 10 inside the package and ensuring their correct cutting locations.

Though the basic idea of the invention is described above only applied to a sauna-bench unit 10, it can equally also be applied to the backrest and intermediate partition units in bathrooms, to end supports, end supports of the upper and lower bench in the middle of a sauna, to step stools, footrests, and sauna-stove guards.

By means of the invention, it is also possible to implement from sauna benches straight benches, corner benches, benches for sitting opposite each other, deep upper and lower benches, in which bench surfaces with a uniform appearance are created by placing units 10 next to each other. In addition, the basic idea of the unit can also be applied to edging for sunk stove recesses, to bench solutions in dressing rooms, and to sauna-benches with bench solution.

It must be understood that the above description and the related figures are only intended to illustrate the present invention. The invention is thus in no way restricted to only the embodiments disclosed above or stated in the Claims, but many different variations and adaptations of the invention, which are possible within the scope on the inventive idea defined in the accompanying Claims, will be obvious to one skilled in the art.

## Claims

1. Sauna-bench unit, which includes
- elongated pieces (11.1 - 11.6) arranged to form a functional surface (12) for the sauna-bench unit (12),
- transverse supports (13), to which at least some of the pieces (11.1 - 11.6) are attached,
- longitudinal supports (14) fitted to the outermost pieces (11.1, 11.6) of the surface (12), which are arranged on the opposite side of the pieces (11.1 - 11.6) relative to the surface (12) and between which the said transverse supports (13) are fitted,
**characterized in that**
- the transverse supports (13) are metal profile pieces (15), at the ends (18) of which are grips (16) for attaching to the longitudinal supports (14),
- between the transverse supports (13) and the pieces (11.1 - 11.6) attached to them and arranged to form the surface (12) is a joint created by means of nail-plate grip formations (17).

2. Sauna-bench unit according to Claim 1, **characterized in that** the longitudinal supports (14) are fitted rigidly to the outermost pieces (11.1, 11.6) of the surface (12).

3. Sauna-bench unit according to Claim 1 or 2, **characterized in that**
- a recess (19) for the grips (16) of the transverse supports (13) is arranged in the inner face (25) of the longitudinal supports (14),
- the grip (16) is arranged to be formed of at least one protrusion (20) fitted to both ends (18) of the transverse support (13), which can be fitted into the recess (19) of the longitudinal supports (14).

4. Sauna-bench unit according to any of Claims 1 - 3, **characterized in that** the longitudinal supports (14) are fitted to the outermost pieces (11.1, 11.6) of the surface (12) by means of a tongue-and-groove joint (21).

5. Sauna-bench unit according to Claim 4, **characterized in that** the tongue-and-groove joint (21) is bevelled, in order to fit the grips (16) of the transverse supports (13) tightly in connection with the longitudinal supports (14).

6. Sauna-bench unit according to any of Claims 3 - 5, **characterized in that** the transverse support (13) is a C-profile rail, in the points of which the said grip protrusions (20) are arranged.

7. Sauna-bench unit according to any of Claims 3 - 6, **characterized in that** a claw arrangement (23) is arranged in the grip protrusions (20), in order to improve the bite into the longitudinal support (14).

8. Sauna-bench unit according to any of Claims 1 - 7, **characterized in that** openings are arranged in the face (24) of the longitudinal support (13) for the grip formations (17) created by means of nail plates.

9. Sauna-bench unit according to any of Claims 1 - 8, **characterized in that** the nail-plate grip formations (17) are integrated with the transverse supports (13).

10. Transverse support for a sauna-bench unit, which is arranged to be attached
- to at least some of the pieces (11.1 - 11.6) forming the functional surface (12) of the sauna-bench unit (10),
- to longitudinal supports (14) fitted to the outermost pieces (11.1, 11.6) of the surface (12), which are fitted to the opposite side of the pieces (11.1 - 11.6), relative to the surface (12),
**characterized in that** the transverse support (13) is a metal profile piece (15), in the ends (18) of which are grips (16) for attachment to the longitudinal pieces (14).

11. Method in the assembly of a sauna-bench unit, in which at least one transverse support (13) is attached
- to at least some of the longitudinal pieces (11.1 - 11.6), which form a functional surface (12) for the sauna-bench unit (10),
- to longitudinal supports (14) fitted to the outermost pieces (11.1, 11.6) of the surface (12), which are on the opposite side of the pieces (11.1 - 11.6), relative to the surface (12),
**characterized in that** the transverse support (13) is attached to the pieces (11.1 - 11.6) and to the longitudinal supports (14) mainly simultaneously by means of a compression method.

12. Method according to Claim 11, **characterized in that** the transverse support (13) is pressed into the pieces (11.1 - 11.6) and into the longitudinal supports (14) using a force (F) in a single direction.

13. Sauna-bench system, which includes at least one sauna-bench unit (10) and a support structure (26) for the sauna-bench unit (10), **characterized in that** at least some of the sauna-bench units (10) of the sauna-bench system are according to any of Claims 1 - 9.

14. Sauna-bench system according to Claim 13, **characterized in that** the support structure (26) includes transverse supports (28) that are not connected to each other.

15. Packaged sauna-bench unit, which includes a packaging material arranged around a sauna-bench unit (10), inside which at least one sauna-bench unit (10) is arranged, **characterized in that**
- the sauna-bench unit (10) is according to any of Claims 1 - 9,
- guide marks are arranged in the outer surface of the packaging material, for cutting at least one sauna-bench unit (10) contained in the package to a sauna-bench system of the desired dimensions.
